# EUROPÄISCHE PATENTSCHRIFT

(11) **EP 2 199 565 B1**
(45) Veröffentlichungstag und Bekanntmachung des Hinweises auf die Patenterteilung: **19.01.2011**
(21) Anmeldenummer: 09014972.5
(22) Anmeldetag: 03.12.2009
(51) Int. Cl.: F02B 37/12, F15B 15/10, F15B 15/28

(54) **Pneumatischer Steller**
Pneumatic actuator
Actionneur pneumatique

(30) Priorität: 17.12.2008 DE 102008063793
(43) Veröffentlichungstag der Anmeldung: 23.06.2010
(73) Patentinhaber: smk systeme metall kunststoff gmbh & co. kg., 70794 Filderstadt-Plattenhardt (DE)
(72) Erfinder: Johnen, Markus, 72581 Dettingen (DE); Wortmann, Frank, 73765 Neuhausen (DE); Hafenbrak, Peter, 74906 Bad Rappenau (DE)
(74) Vertreter: Twelmeier Mommer & Partner

(56) Entgegenhaltungen:
- EP-A1- 2 161 460
- EP-A2- 1 701 015
- EP-A2- 1 852 587
- DE-A1-102005 029 904
- US-A- 3 859 619

## Beschreibung

Die Erfindung betrifft einen pneumatischen Steller mit den im Oberbegriff des Anspruchs 1 angegebenen Merkmalen, wie er beispielsweise ist aus der DE 10 2005 029 904 A1, der EP 1 852 587 A2 oder der US 3 859 619 bekannt ist. Solche pneumatischen Steller werden auch als pneumatische Aktoren bezeichnet und insbesondere im Abgasstrang von Kraftfahrzeugen verwendet, beispielsweise zum Betätigen von Abgasrückführventilen und Abgasklappen oder als Laderdruckregler für Abgasturbolader.

Für eine präzise Steuerung derartiger Steller ist es wünschenswert, die Position der als Stellglied dienenden Stange des Stellers möglichst einfach und präzise erfassen zu können.

Aufgabe der Erfindung ist es, einen Weg aufzuzeigen, wie dies mit geringem Aufwand möglich ist.

Diese Aufgabe wird durch einen pneumatischen Steller mit den im Anspruch 1 angegebenen Merkmalen gelöst. Vorteilhafte Weiterbildungen der Erfindung sind Gegenstand der Unteransprüche.

Bei einem erfindungsgemäßen Steller ist an der Membran ein magnetischer Positionsgeber befestigt und an dem Gehäuse ein Magnetfeldsensor zum Detektieren einer Verschiebung des Positionsgebers. Der Magnetfeldsensor ist erfindungsgemäß auf der von der Stange abgewandten Seite der Membran befestigt, bevorzugt an dem Boden, während die Stange auf der anderen Seite aus dem Gehäuse herausragt, bevorzugt also aus einer Öffnung im Deckel. Auf diese Weise können die momentane Position der Membran und damit auch die Position der Stange präzise bestimmt werden. Vorteilhaft ist dabei insbesondere, dass der damit verbundene Aufwand geringer ist, als die Position der Stange direkt durch einen an der Stange angebrachten Positionsgeber zu bestimmen.

Der erfindungsgemäß verwendete Positionsgeber ist an der Membran befestigt, indem er auf oder in ihr befestigt ist. Der Positionsgeber kann beispielsweise auf die Membran aufgeklebt sein. Möglich ist es auch, als Positionsgeber einen von der Membran umspritzten Dauermagneten zu verwenden. Die Membran trägt den Positionsgeber. Bevorzugt ist der Positionsgeber formschlüssig mit der Membran verbunden. Dies lässt sich vorteilhaft insbesondere dadurch erreichen, dass die Membran auf ihrer von der Stange abgewandten Seite einen Fortsatz aufweist, in dem der Positionsgeber, bevorzugt in Form eines Stifts, steckt. Auf diese Weise kann der Positionsgeber auf und in der Membran befestigt werden.

Ein solcher Fortsatz kann auf seiner von der Stange abgewandten Seite eine Öffnung haben, an die ein hinterschnittener Innenraum anschließt. Der Positionsgeber kann mit einem Rastabschnitt formschlüssig hinter einen solchen Hinterschnitt eingreifen. Der Rastabschnitt kann einen Vorsprung haben, der beispielsweise als eine ringförmige Verdickung ausgebildet ist. Möglich ist es auch den Positionsgeber mit einer Engstelle, beispielsweise einer ringförmigen Nut zu versehen, in die ein Vorsprung hinter der Öffnung des Fortsatzes eingreift, bevorzugt ein ringförmiger Vorsprung. Ein solcher Vorsprung bildet an seinem von der Öffnung abgewandten Ende einen Hinterschnitt zur Verrastung mit dem Positionsgeber. Besonders vorteilhaft ist dabei, dass die Membran zunächst als Kunststoffformteil, beispielsweise aus Silikon, hergestellt und anschließend der Positionsgeber in die Öffnung des Fortsatzes eingesteckt werden kann.

Der Positionsgeber ist bevorzugt ein Stift aus einem ferro- oder ferrimagnetischem Material, bevorzugt aus einer ferromagnetischen Eisenlegierung. Auf diese Weise kann der Stift mit geringem Aufwand als ein Dauermagnet ausgebildet werden. Möglich ist es aber auch, einen magnetischen Positionsgeber zu verwenden, der einen Permanentmagneten enthält und zusätzlich einen weichmagnetischen Teil aufweist, der ständig von dem Permanentmagneten magnetisiert wird.

Ein erfindungsgemäßer Steller wird bevorzugt zum Betätigen eines Ventils im Abgasstrang eines Kraftfahrzeugs verwendet, beispielsweise zum Betätigen einer Abgasklappe, zum Betätigen eines Abgasrückführventils oder als Laderdruckregler für einen Abgasturbolader.

Weitere Einzelheiten und Vorteile der Erfindung werden an einem Ausführungsbeispiel unter Bezugnahme auf die beigefügten Zeichnungen erläutert. Es zeigen:
- Figur 1: ein Ausführungsbeispiel eines erfindungsgemäßen Stellers in einer Schnittansicht; und
- Figur 2: eine Detailansicht der Membran und des darin zu befestigenden Positi- onsgebers.

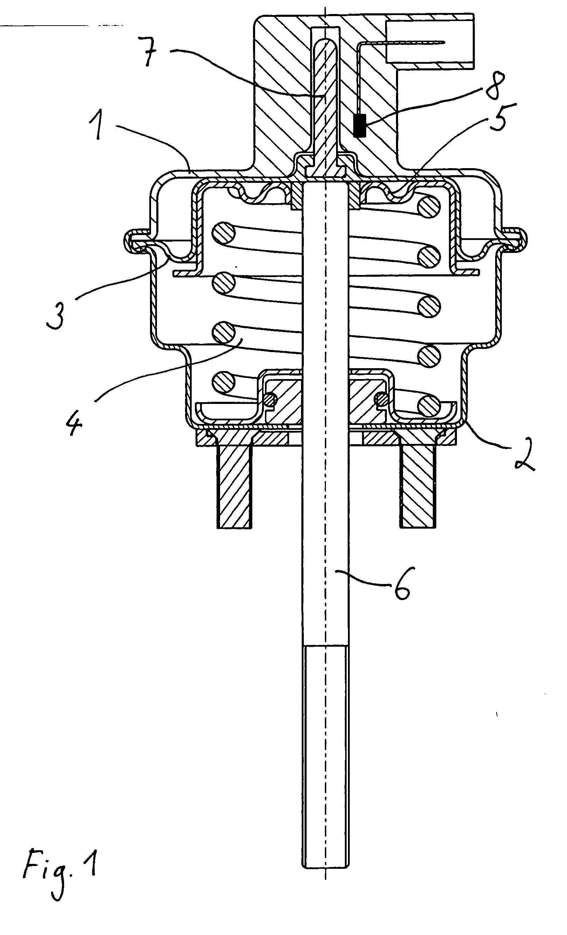

Bei dem in Figur 1 dargestellten pneumatischen Steller handelt es sich um einen Ladedruckregler für Abgasturbolader von Brennkraftmotoren für Automobile. Der Ladedruckregler hat ein zweiteiliges Gehäuse, das einen Boden 1 und einen Deckel 2 aufweist. In dem Gehäuse befindet sich zwischen Boden 1 und Deckel 2 eine eingespannte Membran 3, die in dem Gehäuse einen Arbeitsraum abteilt, der an eine Über- oder Unterdruckquelle anschließbar ist. Bei dem dargestellten Ausführungsbeispiel befindet sich der Arbeitsraum zwischen der Membran 3 und dem Boden 1. Der Boden 1 hat eine in der dargestellten Schnittansicht nicht gezeigte Anschlussöffnung zum Anschließen einer Über- oder Unterdruckquelle.

Die Membran 3 wird durch eine in dem Gehäuse angeordnete Feder 4 zu dem Boden 1 hingedrückt. Bei dem dargestellten Ausführungsbeispiel lastet die Feder 4 auf einem Membranteller 5, an dem die Membran 3 anliegt. Prinzipiell ist es jedoch auch möglich, dass die Feder 4 ohne Zwischenlage eines Membrantellers gegen die Membran 3 drückt.

Aus dem Gehäuse ragt eine Stange 6 heraus, die in ihrer Längsrichtung beweglich ist und bei einen Anstieg oder Abfall des in dem Arbeitsraum herrschenden Drucks einer dadurch bewirkten Bewegung der Membran 3 folgt. Bei dem dargestellten Ausführungsbeispiel wird dies dadurch erreicht, dass die Stange 6 mit einem Ende an dem Membranteller 5 befestigt ist. Bei einer Ausdehnung des Arbeitsraums wird die Stange 6 deshalb von der Membran 3 verschoben, so dass die Stange 6 weiter aus einer Öffnung in dem Deckel 2 des Gehäuses herausragt. Bei einem Abfall des Drucks in dem Arbeitsraum wird die Membran 3 von der Feder 4 zu dem Boden 1 des Gehäuses hinbewegt, wobei die Stange 6 von dem Membranteller 5 tiefer in das Gehäuse hereingezogen wird.

Das in dem Gehäuse angeordnete Ende der Stange 6 ist von der Membran 3 bedeckt. Die Stange 6 kann dabei an der Membran 3 anliegen oder in einem Abstand von ihr enden.

An der Membran 3 ist ein magnetischer Positionsgeber 7 befestigt. Mittels eines an dem Gehäuse befestigten Magnetfeldsensors 8, beispielsweise einem Hall-Sensor, kann eine Verschiebung des Positionsgebers 7 detektiert und somit stets die momentane Position des Positionsgebers 7 ermittelt werden. Da der Positionsgeber 7 an der Membran 3 befestigt ist, erhält man auf diese Weise auch die Position der Membran 3 sowie der ihr folgenden Stange 6.

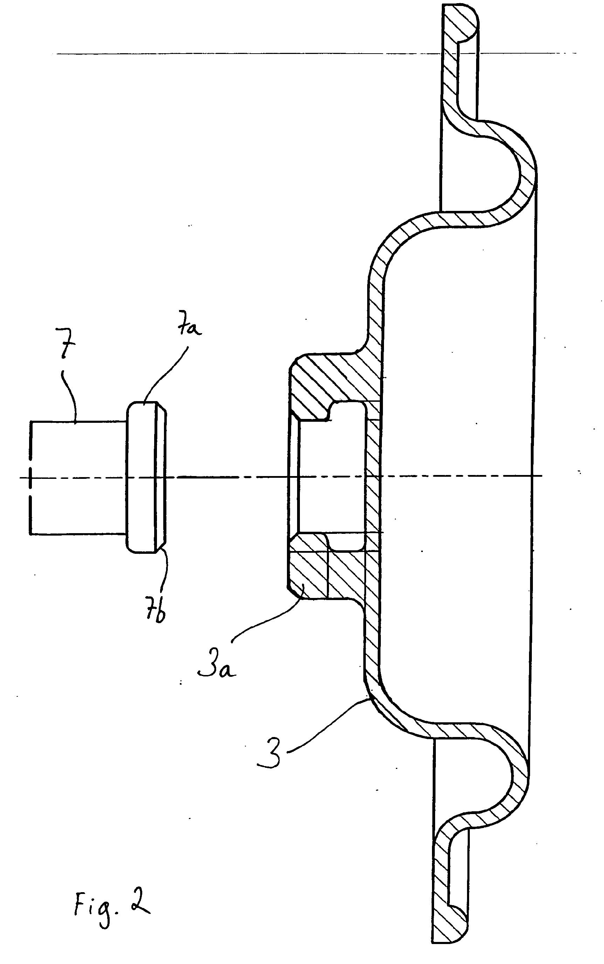

Die Membran 3 und das ihr zugewandte Ende des Positionsgebers 7 sind in Figur 2 im Detail dargestellt. Die Membran 3 trägt den Positionsgeber 7. Der Positionsgeber 7 ist bei dem dargestellten Ausführungsbeispiel ein Permanentmagnet in Form eines Stifts, der formschlüssig mit der Membran 3 verbunden ist.

Die Membran 3 hat auf ihrer von der Stange 6 abgewandten Seite einen Fortsatz 3a, in dem ein Ende des Positionsgebers 7 steckt. Dieser Fortsatz 3a hat auf seiner von der Stange 6 abgewandten Seite eine Öffnung, an die ein Innenraum mit einem Hinterschnitt anschließt. Der Positionsgeber 7 hat einen Rastabschnitt, beispielsweise eine ringförmige Verdickung 7a, die hinter den Hinterschnitt greift, so dass ein Formschluss zwischen dem Positionsgeber 7 und der Membran 3 bewirkt wird. Die Membran 3 kann beispielsweise aus Silikon hergestellt werden und hat eine ausreichende Elastizität, um das Einsetzen des Positionsgebers 7 zu ermöglichen. Um das Einstecken des Positionsgebers 7 zu erleichtern, kann dieser an seinem der Membran 3 zugewandten Ende eine Fase 7b aufweisen.

Der Boden 1 des Gehäuses weist einen Kanal auf, in welchen der Positionsgeber 7 hineinragt. Dieser Kanal ist bevorzugt zylindrisch geformt.

Der Boden 1 des Gehäuses kann beispielsweise ein Spritzgussteil aus Kunststoff sein. Möglich ist es auch, den Boden 1 aus einer nicht magnetischen Legierung, beispielsweise aus Aluminium herzustellen. Bei Verwendung eines Bodenteils 1 aus Kunststoff kann der Magnetfeldsensor 8 vom dem Kunststoffmaterial umspritzt sein. Möglich ist es aber auch, den Magnetfeldsensor 8 in einer passenden Ausnehmung des Gehäuses anzuordnen. Das Gehäuse bildet bei dem dargestellten Ausführungsbeispiel eine Steckverbindung zum Anschließen des Magnetfeldsensors 8 aus. Diese Steckverbindung kann integral mit dem Boden 1 ausgebildet sein.

### Bezugszahlen

- 1: Boden
- 2: Deckel
- 3: Membran
- 3a: Fortsatz
- 4: Feder
- 5: Membranteller
- 6: Stange
- 7: Positionsgeber
- 7a: Verdickung
- 7b: Fase
- 8: Magnetfeldsensor

## Patentansprüche

1. Pneumatischer Steller mit
einem Gehäuse, das einen Boden (1) und einen Deckel (2) aufweist,
einer in dem Gehäuse zwischen Boden (1) und Deckel (2) eingespannten Membran (3), die einen Arbeitsraum abteilt, der an eine Über- oder Unterdruckquelle anschließbar ist,
eine in dem Gehäuse angeordneten Feder (4), welche die Membran (3) zu dem Boden (1) hin drückt,
einer aus dem Gehäuse herausragenden Stange (6), die in ihrer Längsrichtung beweglich ist und einer durch einen Anstieg oder Abfall des in dem Arbeitsraum herrschenden Drucks bewirkten Bewegung der Membran (3) folgt, wobei an der Membran (3) ein magnetischer Positionsgeber (7) befestigt und an dem Gehäuse auf der von der Stange (6) abgewandten Seite der Membran (3) ein Magnetfeldsensor (8) zum Detektieren einer Verschiebung des Positionsgebers (7) befestigt ist, **dadurch gekennzeichnet, dass**
die Membran (3) den magnetischen Positionsgeber (7) trägt, indem der Positionsgeber (7) auf die Membran (3) aufgeklebt ist oder indem die Membran einen Fortsatz aufweist, in dem der positionsgeber steckt.

2. Steller nach Anspruch 1, **dadurch gekennzeichnet, dass** der Positionsgeber (7) ein Stift ist.

3. Steller nach einem der vorstehenden Ansprüche, **dadurch gekennzeichnet, dass** der Positionsgeber (7) formschlüssig mit der Membran (3) verbunden ist.

4. Steller nach einem der vorstehenden Ansprüche, **dadurch gekennzeichnet, dass** die Membran (3) auf ihrer von der Stange (6) abgewandten Seite einen Fortsatz (3a) aufweist, in dem ein Ende des Positionsgebers (7) angeordnet ist.

5. Steller nach einem der vorstehenden Ansprüche, **dadurch gekennzeichnet, dass** der Fortsatz (3a) auf seiner von der Stange (6) abgewandten Seite eine Öffnung aufweist, aus welcher der Positionsgeber (7) herausragt.

6. Steller nach einem der vorstehenden Ansprüche, **dadurch gekennzeichnet, dass** der Fortsatz (3a) einen Innenraum mit einem Hinterschnitt und der Positionsgeber (7) einen formschlüssig hinter den Hinterschnitt greifenden Rastabschnitt aufweist.

7. Steller nach einem der vorstehenden Ansprüche, **dadurch gekennzeichnet, dass** der Boden (1) einen Kanal aufweist, in welchen der Positionsgeber (7) hineinragt.

8. Steller nach einem der vorstehenden Ansprüche, **dadurch gekennzeichnet, dass** der Positionsgeber (7) aus Metall ist.

9. Steller nach einem der vorstehenden Ansprüche, **dadurch gekennzeichnet, dass** der Positionsgeber (7) an seinem der Membran (3) zugewandten Ende eine Fase (7b) aufweist.

10. Steller nach einem der vorstehenden Ansprüche, **dadurch gekennzeichnet, dass** der Boden (1) aus Kunststoff ist.

11. Steller nach einem der vorstehenden Ansprüche, **dadurch gekennzeichnet, dass** die Membran (3) aus Silikon ist.

12. Steller nach einem der vorstehenden Ansprüche, **dadurch gekennzeichnet, dass** das in dem Gehäuse angeordnete Ende der Stange (6) von der Membran (3) bedeckt ist.

13. Verwendung eines pneumatischen Stellers nach einem der vorstehenden Ansprüche zum Betätigen eines Ventils im Abgasstrang eines Kraftfahrzeugs.

## Claims

1. A pneumatic actuator comprising
a housing that has a base (1) and a cover (2),
a diaphragm (3) which is clamped in the housing between the base (1) and the cover (2) and separates off a working chamber that can be connected to a source of overpressure or vacuum,
a spring (4) which is disposed in the housing and presses the diaphragm (3) toward the base (1),
a rod (6) which extends out of the housing, is movable in the longitudinal direction thereof, and follows a motion of the diaphragm (3) caused by an increase or decrease of the pressure present in the working chamber, wherein a magnetic position sensor (7) is fastened to the diaphragm (3), and a magnetic field sensor (8) for detecting a displacement of the position sensor (7) is fastened to the housing on the side of the diaphragm (3) facing away from the rod (6),
**characterized in that**
the diaphragm (3) carries the magnetic position sensor (7) by the position sensor (7) being bonded to the diaphragm (3), or by the diaphragm having an extension into which the position sensor is inserted.

2. The actuator according to claim 1, **characterized in that** the position sensor (7) is a pin.

3. The actuator according to one of the preceding claims, **characterized in that** the position sensor (7) is connected to the diaphragm (3) in a form-fit manner.

4. The actuator according to one of the preceding claims, **characterized in that** the diaphragm (3) has an extension (3a) on the side thereof facing away from the rod (6), in which one end of the position sensor (7) is disposed.

5. The actuator according to one of the preceding claims, **characterized in that** the extension (3a) has an opening on the side thereof facing away from the rod (6), out of which the position sensor (7) extends.

6. The actuator according to one of the preceding claims, **characterized in that** the extension (3a) has an inner chamber with an undercut, and the position sensor (7) has a detent section that reaches behind the undercut in a form-fit manner.

7. The actuator according to one of the preceding claims, **characterized in that** the base (1) has a channel into which the position sensor (7) extends.

8. The actuator according to one of the preceding claims, **characterized in that** the position sensor (7) is composed of metal.

9. The actuator according to one of the preceding claims, **characterized in that** the position sensor (7) has a bevel (7b) on the end thereof facing the diaphragm (3).

10. The actuator according to one of the preceding claims, **characterized in that** the base (1) is composed of plastic.

11. The actuator according to one of the preceding claims, **characterized in that** the diaphragm (3) is composed of silicone.

12. The actuator according to one of the preceding claims, **characterized in that** the end of the rod (6) disposed in the housing is covered by the diaphragm (3).

13. The use of a pneumatic actuator according to one of the preceding claims to actuate a valve in the exhaust-system branch of a motor vehicle.

## Revendications

1. Organe de réglage pneumatique, avec
- un boîtier comportant un fond (1) et un couvercle (2), une membrane (3) tendue dans le boîtier entre le fond (1) et le couvercle (2), qui cloisonne une chambre de travail apte à être raccordée à une source de surpression ou de sous-pression,
- un ressort (4) disposé dans le boîtier, qui presse la membrane (3) vers le fond (1),
- une barre (6) sortant du boîtier, mobile dans son sens longitudinal et suivant un mouvement de la membrane (3) qui est produit par la hausse ou la baisse de la pression présente dans la chambre de travail, dans lequel
- un transmetteur de position magnétique (7) est fixé à la membrane (3), et un détecteur de champ magnétique (8) est fixé au boîtier, du côté de la membrane (3) qui détourné de la barre (6), pour la détection d'un décalage du transmetteur de position (7),
**caractérisé en ce que**
- la membrane (3) porte le transmetteur de position magnétique (7), le transmetteur de position (7) étant collé sur la membrane (3) ou la membrane comportant un prolongement dans lequel est coincé le transmetteur de position.

2. Organe de réglage selon la revendication 1, **caractérisé en ce que** le transmetteur de position (7) est une tige.

3. Organe de réglage selon l'une des revendications précédentes, **caractérisé en ce que** le transmetteur de position (7) est relié par complémentarité de forme avec la membrane (3).

4. Organe de réglage selon l'une des revendications précédentes, **caractérisé en ce que**, de son côté détourné de la barre (6), la membrane (3) comporte un prolongement (3a), dans lequel est disposée une extrémité du transmetteur de position (7).

5. Organe de réglage selon l'une des revendications précédentes, **caractérisé en ce que** de son côté détourné de la barre (6), le prolongement (3a) comporte une ouverture de laquelle sort un transmetteur de position (7).

6. Organe de réglage selon l'une des revendications précédentes, **caractérisé en ce que** le prolongement (3a) comporte un espace intérieur, avec une contre-dépouille, et un transmetteur de position (7) comporte une section d'enclenchement venant en prise par complémentarité de forme derrière la contre-dépouille.

7. Organe de réglage selon l'une des revendications précédentes, **caractérisé en ce que** le fond (1) comporte un canal, dans lequel s'introduit le transmetteur de position (7).

8. Organe de réglage selon l'une des revendications précédentes, **caractérisé en ce que** le transmetteur de position (7) est en métal.

9. Organe de réglage selon l'une des revendications précédentes, **caractérisé en ce que** le transmetteur de position (7) comporte un chanfrein (7b) à son extrémité tournée vers la membrane (3).

10. Organe de réglage selon l'une des revendications précédentes, **caractérisé en ce que** le fond (1) est en matière plastique.

11. Organe de réglage selon l'une des revendications précédentes, **caractérisé en ce que** la membrane (3) est en silicone.

12. Organe de réglage selon l'une des revendications précédentes, **caractérisé en ce que** l'extrémité de la barre (6) qui est disposée dans le boîtier est recouverte par la membrane (3).

13. Utilisation d'un organe de réglage pneumatique selon l'une des revendications précédentes, pour l'actionnement d'une soupape dans la ligne de transmission d'un véhicule automobile.
